# EUROPÄISCHE PATENTSCHRIFT

(11) **EP 0 694 583 B1**
(45) Veröffentlichungstag und Bekanntmachung des Hinweises auf die Patenterteilung: **05.01.2000**
(21) Anmeldenummer: 95111119.4
(22) Anmeldetag: 15.07.1995
(51) Int. Cl.: C08L 77/00

(54) **Polyamid/Polyolefin-Mischungen**
Polyamid/Polyolefinblends
Alliages de polyamide/polyoléfine

(30) Priorität: 26.07.1994 DE 4426434
(43) Veröffentlichungstag der Anmeldung: 31.01.1996
(73) Patentinhaber: BASF AKTIENGESELLSCHAFT, 67056 Ludwigshafen (DE)
(72) Erfinder: Gottschalk, Axel, D-67435 Neustadt (DE); Fisch, Herbert, D-67157 Wachenheim (DE); Pipper, Gunter, D-67098 Bad Dürkheim (DE); Weber, Martin, D-67433 Neustadt (DE)

(56) Entgegenhaltungen:
- EP-A- 0 345 486
- EP-A- 0 519 248
- EP-A- 0 540 842
- EP-A- 0 667 367
- DE-A- 1 933 395
- GB-A- 1 403 797
- GB-A- 2 194 540

## Beschreibung

Die Erfindung betrifft thermoplastische Formmassen, enthaltend
A) 4 bis 95 Gew.-% eines teilkristallinen, teilaromatischen Copolyamids aufgebaut aus
   - a₁) 30 bis 44 mol-%: Einheiten, welche sich von Terephthalsäure ableiten
   - a₂) 6 bis 20 mol-%: Einheiten, welche sich von Isophthalsäure ableiten
   - a₃) 43 bis 49,5 mol-%: Einheiten, welche sich von Hexamethylendiamin ableiten
   - a₄) 0,5 bis 7 mol-%: Einheiten, welche sich von aliphatischen cyclischen Diaminen mit 6 bis 30 C-Atomen ableiten
wobei die Molprozente der Komponenten a₁) bis a₄) zusammen 100 % ergeben und
- B) 4 bis 95 Gew.-%: eines Homo- oder copolymerisats aus α-Olefinen und gegebenenfalls nicht konjugierten Dienen, oder deren Mischungen
- C) 1 bis 20 Gew.-%: eines Haftvermittlers auf Basis eines Polymerisats aufgebaut aus einem oder mehreren α-Olefinen und 0,1 bis 20 Gew.-%, bezogen auf 100 Gew.-% der Komponente C) funktionellen Monomeren
- D) 0 bis 20 Gew.-%: eines kautschukelastischen Polymerisates welches mindestens eine Elastomerphase mit einer Erweichungstemperatur unter -25°C aufweist und nicht der für B) und C) angegebenen Definition entspricht
- E) 0 bis 50 Gew.-%: eines faser- oder teilchenförmigen Füllstoffes
- F) 0 bis 30 Gew.-%: üblicher Zusatzstoffe und Verarbeitungshilfsmittel,
wobei die Gewichtsprozente der Komponenten A bis F zusammen 100 % ergeben.

Außerdem betrifft die Erfindung die Verwendung der thermoplastischen Formmassen zur Herstellung von Fasern, Folien und Formkörpern sowie die hierbei erhältlichen Formkörper.

Polyolefine wie Polypropylen zeichnen sich durch gute Lösungsmittelbeständigkeit, geringe Wasseraufnahme und sehr gute Verarbeitbarkeit aus, so daß für viele Anwendungen eine Kombination mit den allgemein hoher schmelzenden Polyamiden wünschenswert ist.

Da beide Polymerphasen im allgemeinen nicht verträglich sind, mussen diesen Blends Verträglichkeitsvermittler (Haftvermittler) zugesetzt werden, um eine gute Dispergierung und gegenseitige Verankerung der beiden Polymerphasen zu erreichen.

Blends aus Olefinen und Polyamiden sind aus der GB-A 1 403 797 bekannt.

Die Blends enthalten als Haftvermittler ein mit Maleinsäureanhydrid gepfropftes Polypropylen.

Aus der DE-A 3 507 128 sind Terpolymere aus Ethylen, n-Butylacrylat und Acrylsäure als Haftvermittler in PP/PA Blends bekannt.

Aus der GB-A 2 226 035 sind Haftvermittlermischungen aus Polyolefinkautschuken, gepfropften Copolymeren des Polypropylens und einem gepfropften Polyolefinkautschuk bekannt.

Insgesamt weisen die aus dem Stand der Technik bekannten Formmassen verbesserte Eigenschaften gegenüber solchen Formmassen ohne Haftvermittler auf, dennoch ist die Zähigkeit insbesondere die multiaxiale Zähigkeit unbefriedigend.

Weiterhin entstehen bei der Verarbeitung dieser Blends Delaminierungs- und Zersetzungsprobleme, da die Schmelztemperaturen und -viskositäten der einzelnen Polymeren meist eine zu große Differenz für einen verwendbaren Blend aufweisen. Im Hinblick auf die sehr geringe Wasseraufnahme des Polyolefins wäre eine Kombination mit Polyamiden, die insbesondere bei erhöhten Dauergebrauchstemperaturen verwendet werden, jedoch wünschenswert.

Aus der EP-A 519 248 sind Blends aus Polyolefinen mit teilaromatischen Copolyamiden bekannt, die eine erhöhte Dauergebrauchstemperatur aufweisen. Die Verarbeitungseigenschaften sind jedoch noch verbesserungswürdig, da durch den hohen Unterschied der Schmelztemperaturen der beiden Polymeren Formkörper entstehen, deren mechanische Eigenschaften noch verbesserungswürdig sind.

Aufgabe der vorliegenden Erfindung war es daher, thermoplastische Formmassen auf der Basis von Polyamiden und Polyolefinen zur Verfügung zu stellen, die sich durch eine gute Verarbeitungsstabilitat in Kombination mit einem guten Zähigkeits-/Steifigkeitsverhältnis (hoherer E-Modul in Kombination mit höherer multiaxialerer Zähigkeit) auszeichnen. Weiterhin sollten derartige Formmassen eine hohe Bindenahtfestigkeit und Wärmeformbeständigkeit aufweisen.

Diese Aufgabe wird erfindungsgemäß durch die eingangs definierten thermoplastischen Formmassen gelöst. Bevorzugte Massen dieser Art und deren Verwendung sind den Unteransprüchen zu entnehmen.

Als Komponente A) enthalten die erfindungsgemäßen Formmassen ein teilaromatisches teilkristallines Copolyamid, in Mengen von 4 bis 95, vorzugsweise 20 bis 75 und insbesondere 40 bis 70 Gew.-% eines Copolyamids, aufgebaut aus
a₁) 30 bis 44, vorzugsweise 32 bis 40 und insbesondere 32 bis 38 mol-% Einheiten, welche sich von Terephthalsäure ableiten,
a₂) 6 bis 20, vorzugsweise 10 bis 18 und insbesondere 12 bis 18 mol-% Einheiten, welche sich von Isophthalsäure ableiten,
a₃) 43 bis 49,5, vorzugsweise 46 bis 48,5 und insbesondere 46,3 bis 48,2 mol-% Einheiten, welche sich von Hexamethylendiamin ableiten,
a₄) 0,5 bis 7, vorzugsweise 1,5 bis 4 und insbesondere 1,8 bis 3,7 mol-% Einheiten, welche sich von aliphatischen cyclischen Diaminen mit 6 bis 30, vorzugsweise 13 bis 29 und insbesondere 13 bis 17 C-Atomen ableiten,
wobei die Molprozente der Komponenten a₁) bis a₄) zusammen 100 % ergeben.

Die Diamineinheiten a₃) und a₄) werden vorzugsweise äquimolar mit den Dicarbonsäureeinheiten a₁) und a₂) umgesetzt.

Geeignete Monomere a₄) sind vorzugsweise cyclische Diamine der Formel 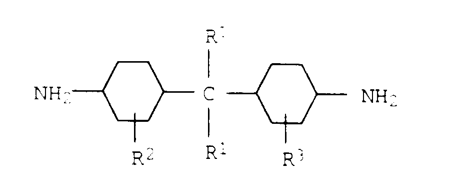 in der
- R¹: Wasserstoff oder eine C₁-C₄-Alkylgruppe,
- R²: eine C₁-C₄-Alkylgruppe oder Wasserstoff und
- R³: eine C₁-C₄-Alkylgruppe oder Wasserstoff bedeutet.

Besonders bevorzugte Diamine a₄) sind Bis(4-aminocyclohexyl)-methan, Bis(4-amino-3-methylcyclohexyl)methan, Bis(4-aminocyclohexyl)-2,2-propan und Bis(4-amino-3-methylcyclohexyl)-2,2-propan.

Als weitere Monomere a₄) seien 1,3- und 1,4-Cyclohexandiamin und Isophorondiamin genannt.

Neben den vorstehend beschriebenen Einheiten a₁) bis a₄) können die teilaromatischen Copolyamide A) bis zu 4, vorzugsweise bis zu 3,5 Gew.-% (bezogen auf 100 Gew.-% A) Einheiten weiterer polyamidbildender Monomeren a₅) enthalten, wie sie von anderen Polyamiden bekannt sind.

Aromatische Dicarbonsäuren a₅) weisen 8 bis 16 Kohlenstoffatome auf. Geeignete aromatische Dicarbonsäuren sind beispielsweise substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphtalindicarbonsäure und Phenoxyterephthalsäure.

Weitere polyamidbildende Monomere a₅) können sich von Dicarbonsäuren mit 4 bis 16 Kohlenstoffatomen und aliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin oder Piperazin, als Vertreter der Diamine und Caprolactam, Capryllactam, Önanthlactam, ω-Aminoundecansäure und Laurinlactam als Vertreter von Lactamen bzw. Aminocarbonsäuren genannt.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die uber 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 290°C bis 340°C, bevorzugt von 292 bis 330°C, wobei dieser Schmelzpunkt mit einer hohen Glasubergangstemperatur von in der Regel mehr als 120°C, insbesondere mehr als 130°C (im trockenen Zustand) verbunden ist.

Bei den teilaromatischen Copolyamide sollen erfindungsgemäß solche verstanden werden, die einen Kristallinitätsgrad > 30 %, bevorzugt > 35 %, und insbesondere > 40 % aufweisen.

Der Kristallinitätsgrad ist ein Maß für den Anteil an kristallinen Fragmenten im Copolyamid und wird durch Röntgenbeugung oder indirekt durch Messung von ΔH_{krist.} bestimmt.

Selbstverständlich können auch Mischungen der teilaromatischen Copolyamide umgesetzt werden, wobei das Mischungsverhältnis beliebig ist.

Geeignete Verfahren zur Herstellung der erfindungsgemäßen Copolyamide sind dem Fachmann bekannt.

Als bevorzugte Herstellweise sei der Batch-Prozeß (diskontinuierliche Herstellweise) genannt. Dabei wird die wäßrige Monomerenlösung innerhalb 0,5 bis 3 h in einem Autoklaven auf Temperaturen von 280 - 340°C erhitzt, wobei ein Druck von 10 - 50, insbesondere 15 - 40 bar erreicht wird, der durch Entspannen von überschüssigem Wasserdampf möglichst konstant bis zu 2 h gehalten wird. Anschließend entspannt man den Autoklaven bei konstanter Temperatur innerhalb eines Zeitraumes von 0,5 - 2 h, bis man einen Enddruck von 1 bis 5 bar erreicht hat. Anschließend wird die Polymerschmelze ausgetragen, abgekühlt und granuliert.

Ein anderes bevorzugtes Verfahren erfolgt in Anlehnung an die in den EP-A 129195 und 129 196 beschriebenen Verfahren.

Gemaß diesen Verfahren wird eine wäßrige Lösung der Monomeren a₁) bis a₄) sowie gegebenenfalls a₅) mit einem Monomerengehalt von 30 bis 70, vorzugsweise 40 bis 65 Gew.-% unter erhöhtem Druck (1 bis 10 bar) und unter gleichzeitiger Verdampfung von Wasser und Bildung eines Präpolymeren innerhalb von weniger als 60 s auf eine Temperatur von 280 bis 330°C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 280 bis 330°C bei einer Verweilzeit von 5 - 30 min. polykondensiert. Es versteht sich von selbst, daß die Temperatur im Reaktor über dem bei dem jeweiligen Wasserdampf-Druck erforderlichen Schmelzpunkt des entstehenden Präpolymeren liegt.

Durch diese kurzen Verweilzeiten wird die Bildung von Triaminen weitgehend verhindert.

Das so erhaltene Polyamid-Präpolymere, das in der Regel eine Viskositätszahl von 40 bis 70 ml/g, bevorzugt von 40 bis 60 ml/g, gemessen an einer 0,5 gew.-%igen Lösung in 96 %iger Schwefelsäure bei 25°C, aufweist, wird kontinuierlich aus der Kondensationszone entnommen.

Nach einer bevorzugten Arbeitsweise leitet man das so erhaltene Polyamid-Präpolymere schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert.

In einer besonders bevorzugten Ausführungsform ist es auch möglich, die Komponenten B) und C) sowie gegebenenfalls D) bis F) schon in den Entgasungsextruder zum Präpolymeren der Komponente A) zu geben, wobei in diesem Fall der Entgasungsextruder üblicherweise mit geeigneten Mischelementen, wie Knetblöcken, ausgestattet ist. Anschließend wird ebenfalls als Strang extrudiert, gekühlt und granuliert.

Dieses Granulat wird in fester Phase unter Inertgas kontinuierlich oder diskontinuierlich bei einer Temperatur unterhalb des Schmelzpunktes, z.B. von 170 bis 240°C, bis zur gewünschten Viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas Stickstoff oder insbesondere überhitzter Wasserdampf, vorteilhaft der am Kopf der Kolonne anfallende Wasserdampf, verwendet wird.

Die Viskositätszahl, gemessen an einer 0,5 gew.-%igen Lösung in 96 %iger Schwefelsäure bei 25°C, liegt nach der Nachkondensation in fester Phase oder den anderen vorstehend genannten Herstellverfahren im allgemeinen im Bereich von 100 bis 500 ml/g, vorzugsweise von 110 bis 200 ml/g.

Als Komponente B) enthalten die erfindungsgemäßen Formmassen 4 bis 95, bevorzugt von 23 bis 75 und insbesondere 28 bis 55 Gew.-% eines Homo- oder copolymerisates aus α-Olefinen und gegebenenfalls nicht konjugierten Dienen oder deren Mischungen. Die komponente B) weist im allgemeinen einen Schmelzpunkt > 90, bevorzugt > 125°C und insbesondere > 160°C auf.

Geeignete Polyolefinhomopolymerisate sind z.B. Polyethylen, Polypropylen und Polybuten, wobei Polypropylen bevorzugt ist.

Geeignete Polyethylene sind Polyethylene sehr niedriger (LLD-PE), niedriger (LD-PE, mittlerer (MD-PE) und hoher Dichte (HD-PE). Es handelt sich dabei um kurz- oder langkettenverzweigte oder lineare Polyethylene, die in einem Hochdruckprozeß in Gegenwart von Radikalstartern (LD/PE) oder in einem Niederdruckprozeß in Gegenwart von sog. komplexen Initiatoren z.B. Phillips- oder Ziegler-Natta Katalysatoren (LLD-PE, MD-PE, HD-PE) hergestellt werden. Die Kurzkettenverzweigungen im LLD-PE bzw. MD-PE werden durch Copolymerisation mit α-Olefinen (z.B. Buten, Hexen oder Octen) eingeführt.

LLD/PE weist im allgemeinen eine Dichte von 0,9 bis 0,93 g/cm³ und eine Schmelztemperatur (bestimmt mittels Differentialthermoanalyse) von 120 bis 130°C auf, LD-PE eine Dichte von 0,915 bis 0,935 c/cm³ und eine Schmelztemperatur von 105 bis 115°C, MD-PE eine Dichte von 0,93 bis 0,94 g/cm³ und eine Schmelztemperatur von 120 bis 130°C und HD-PE eine Dichte von 0,94 bis 0,97 g/cm³ und eine Schmelztemperatur von 128 bis 136°C.

Die Fließfähigkeit gemessen als Schmelzindex MVI beträgt allgemein 0,05 bis 35 g/10'. Der Schmelzflußindex entspricht dabei der Menge an Polymerisat, die innerhalb von 10 Min. aus der nach DIN 53 735 genormten Prüfvorrichtung bei einer Temperatur von 190°C und 2,16 kg Belastung ausgepreßt wird.

Bevorzugt enthalten die erfindungsgemäßen Formmassen Polypropylen als Komponente B).

Geeignete Polypropylene sind dem Fachmann bekannt und werden beispielsweise im Kunststoffhandbuch Band IV, Polyolefine, Carl Hauser Verlag München beschrieben.

Der Meltvolumenindex MVI nach DIN 53 735 beträgt im allgemeinen 0,3 bis 80 g/10 min, vorzugsweise 0,5 bis 35 g/10 min bei 230°C und 2,16 kg Belastung.

Die Herstellung derartiger Polypropylene erfolgt üblicherweise durch Niederdruckpolymerisation mit metallhaltigen Katalysatoren, beispielsweise mit Hilfe von titan- und aluminiumhaltigen Ziegler-Katalysatoren, oder im Falle des Polyethylens auch durch Phillips-Katalysatoren auf der Basis von chromhaltigen Verbindungen. Die Polymerisationsreaktion kann dabei mit den in der Technik üblichen Reaktoren, sowohl in der Gasphase, in Lösung oder auch in einer Aufschlämmung durchgeführt werden.

Das Polyethylen oder Polypropylen kann bei der Herstellung der erfindungsgemäßen Polymermischung sowohl als Grieß als auch als Granulat verwendet werden. Es können auch Mischungen des Polyethylens mit Polypropylen eingesetzt werden, wobei das Mischungsverhältnis beliebig ist.

Darüber hinaus eignen sich als Komponente B) Copolymerisate von Ethylen mit α-Olefinen wie Propylen, Buten, Hexen, Penten, Hepten und Octen oder mit nicht konjugierten Dienen wie Norbornadien und Dicyclopentadien. Es sollen unter Copolymerisaten B) sowohl statistische als auch Blockcopolymere verstanden werden.

Statistische Copolymere werden üblicherweise durch Polymerisation einer Mischung verschiedener Monomeren, Blockcopolymere durch nacheinanderfolgende Polymerisation verschiedener Monomere erhalten.

Als Komponente C) enthalten die erfindungsgemäßen Formmassen 1 bis 20, vorzugsweise 2 bis 15 und insbesondere 2 bis 12 Gew.-% eines Haftvermittlers auf Basis eines Polymerisats aufgebaut aus einem oder mehreren α-Olefinen und 0,1 bis 20 Gew.-%, bezogen auf 100 Gew.-% Komponente C) funktionellen Monomeren, welcher verschieden von D) und B) ist. Es handelt sich hierbei um ein Polymeres, welches eine ausreichende

Affinität sowohl zur Komponente A) als auch zu B) aufweist. Entsprechend wird die Grenzflächenspannung zwischen A) und B) reduziert, wobei eine bessere Phasendispergierung und Phasenhaftung erzielt wird.

Geeignete Polymere als Haftvermittler C) sind die unter B) beschriebenen Homo- und Copolymerisate aus α-Olefinen und gegebenenfalls nicht konjugierten Dienen, welche 0,1 bis 20, vorzugsweise 0,2 bis 10 und insbesondere 0,2 bis 5 Gew.-% (bezogen auf 100 Gew.-% der Komponente C) an funktionellen Monomeren enthalten.

Unter funktionellen Monomeren sollen Carbonsäure-, Säureanhydrid-, Säureamid-, Säureimid-, Carbonsäureester-, Amino-, Hydroxyl-, Epoxid-, Oxazolin-, Urethan-, Harnstoff- oder Lactamgruppen enthaltende Monomere verstanden werden, die eine reaktive Doppelbindung zusätzlich aufweisen.

Beispiele hierfür sind Methacrylsäure, Maleinsäure, Maleinsäureanhydrid, Fumarsäure, Itaconsäure sowie die Alkylester der vorstehenden Säure bzw. deren Amide, Maleinsäureimid, Allylamin, Allylalkohol, Glycidylmethacrylat, Vinyl- und Isopropenyloxazolin und Methacryloylcaprolactam.

Man kann die funktionellen Monomeren entweder durch Copolymerisation oder Pfropfung in die Polymerkette einführen. Die Pfropfung kann entweder in Lösung oder in der Schmelze erfolgen, wobei gegebenenfalls Radikalstarter wie Peroxide, Hydroperoxide, Perester und Percarbonate mitverwendet werden können.

Derartige Haftvermittler sind allgemein im Handel erhältlich (Polybond®, Exxelor®, Hostamont®, Admer®, Orevac® und Epolene®, Hostaprime®).

Die erfindungsgemäßen Formmassen können 0 bis 20, vorzugsweise 0 bis 15 und insbesondere 0 bis 10 Gew.-% eines kautschukelastischen Polymerisats, welches nicht der für B) und C) angegebenen Definition entspricht, enthalten. Derartige Polymerisate werden oft auch als schlagzähmodifizierende Polymere, Schlagzähmodifier, Elastomere oder Kautschuke bezeichnet.

Die Komponente D) weist mindestens eine Elastomerphase auf, deren Erweichungstemperatur unter -25, bevorzugt unter -30°C liegt.

Schlagzäh modifizierende Polymere, die die Zähigkeit der Komponente B) erhöhen, sind Copolymere des Ethylens mit Propylen sowie einem konjugierten Dien EPDM Kautschuke), wobei der Ethylengehalt bevorzugt 45 und insbesondere 50 Gew.-% (bezogen auf 100 Gew.-% der Komponente D)) beträgt.

Derartige Schlagzähmodifier sind allgemein bekannt, weshalb für weitere Einzelheiten hier auf die Publikation von Cartasegna in Kautschuk, Gummi, Kunststoffe 39, 1186-91 (1986) verwiesen sei.

Kautschuke, die die Zähigkeit von Polyamiden erhöhen, weisen i.a. zwei wesentliche Merkmale auf: sie enthalten einen elastomeren Anteil, der eine Glastemperatur von weniger als -10°C, vorzugsweise von weniger als -30°C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien z.B. folgende genannt:

EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie z.B. Cumolhydroperxoid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.-%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich i.a. von Butadien, Isopren, Alkylacrylaten oder Alkylmethacrylaten und gegebenenfalls weiteren Comonomeren ab. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tert.-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1 : 9 bis 9 : 1, bevorzugt 3 : 7 bis 8 : 2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US-A 3 651 015, beschrieben. Auch im Handel sind entsprechende Produkte unter den Bezeichnungen Hytrel® (Du Pont), Arnitel® (Akzo und Pelprene® erhältlich.

Selbstverständlich könne auch Mischungen verschiedener Kautschuke eingesetzt werden.

Als weiteren Bestandteil können die erfindungsgemäßen Formmassen 0 bis 50, vorzugsweise bis 35 Gew.-% eines faser- oder teilchenförmigen Füllstoffes (Komponente (E)) oder deren Mischungen enthalten.

Bevorzugte faserförmige Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 µm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Magnesiumcarbonat (Kreide), Kaolin (insbesondere kalzinierter Kaolin), gepulverter Quarz, Glimmer, Talkum, Feldspat und insbesondere Calciumsilikate wie Wollastonit.

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Neben den wesentlichen Komponenten A) bis C) sowie gegebenenfalls D) und/oder E) können die erfindungsgemäßen Formmassen übliche Zusatzstoffe und Verarbeitungshilfsmittel F) enthalten. Deren Anteil beträgt im allgemeinen bis zu 30, vorzugsweise bis zu 15 Gew.%, bezogen auf das Gesamtgewicht der Komponenten (A) bis (F).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃·Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Die Halogenide, insbesondere des Kupfers, können auch noch elektronenreiche π-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Als Flammschutzmittel seien hier nur roter Phosphor und die anderen an sich für Polyamide bekannten Flammschutzmittel genannt.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und schließend extrudiert. Nach der Extrusion wird das Extrudat gekühlt und zerkleinert.

Die erfindungsgemäßen Formmassen zeichnen sich durch höhere Wärmeformbeständigkeit, gute multiaxiale Schlagzähigkeit in Kombination mit einem guten Elastizitätsmodul aus. Insbesondere lassen sie sich problemlos thermoplastisch verarbeiten und eignen sich demgemäß zur Herstellung von Fasern, Folien und Formkörpern. Faserverstärkte Formkörper weisen eine sehr gute Oberfläche auf, so daß sie insbesondere für Anwendungen im Fahrzeugbau geeignet sind.

### Beispiele

### Komponente A)

Eine ca. 60 %ige wäßrige Lösung, bestehend aus Terephthalsäure (32,2 mol-% ≙ 37,5 Gew.-%), Isophthalsäure (17,8 mol-% ≙ 20,6 Gew.-%), Hexamethylendiamin (48,1 mol-% ≙ 39,1 Gew.-% bzw. 1,9 mol-% ≙ 2,8 Gew.-%), Bis(4-aminocyclohexyl)methan und 0,174 kg Propionsäure sowie 100 kg Wasser wurde aus einem beheizten Vorratsbehälter bei ca. 80°C mit einer Geschwindigkeit entsprechend einer Polyamidmenge von 5 kg/Stunde mittels einer Dosierpumpe in eine teilweise horizontal, teilweise vertikal angeordneten Röhrenverdampfer befördert. Der Verdampfer war mit einem flüssigen Wärmeträger, der eine Temperatur von 326°C hatte, bei kräftiger Umwälzung beheizt. Der Verdampfer hatte eine Länge von 3 m und einen Inhalt von 180 ml und eine wärmeübertragende Oberfläche von etwa 1300 cm². Die Verweilzeit im Verdampfer betrug 50 sec. Das aus dem Verdampfer austretende Gemisch aus Präpolymeren und Wasserdampf hatte eine Temperatur von 310°C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 l Brüdenkondensat pro Stunde zur Erzeugung von Rücklauf aufgegeben wurden. Am Kolonnenkopf stellte sich eine Temperatur von 152°C ein. Der nach dem Entspannungsventil austretende Wasserdampf wurde kondensiert und hatte einen Gehalt an Hexamethylendiamin von weniger als 0,05 Gew.-%. Als Kolonnensumpf erhielt man eine wäßrige Lösung von Hexamethylendiamin, die 80 Gew.-% Hexamethylendiamin, jeweils bezogen auf erzeugtes Polyamid enthielt. Diese Lösung wurde über eine Pumpe wieder vor dem Eintritt in den Verdampfer der Ausgangssalzlösung zugegeben.

Nach Austritt der Polymerschmelze aus dem Abscheider hatte das Polyamid eine sehr helle Eigenfarbe und eine Viskositätszahl von 48 ml/g (gemessen als 0,5 %ige Lösung bei 25°C in 96 gew.-%iger H₂SO₄ gemäß DIN 53 246).

Das Produkt wies in etwa eine Äquivalenz von Carboxyl- und Aminoendgruppen auf.

Im Austragsextruder wurde die Schmelze auf Normaldruck entspannt und bei einer Verweilzeit von weniger als 1 Minute praktisch nicht mehr weiter kondensiert.

Anschließend wurde das Produkt in fester Phase in einem feststehenden Temperrohr (doppelwandiges, von außen mit Öl auf Temper-Temperatur beheiztes Glasrohr von 120 mm Innendurchmesser und 1000 mm Länge, das mit überhitztem Wasserdampf mit 120 l/min durchstromt ist) bei 200°C diskontinuierlich auf eine Viskositätszahl von 112 ml/g getempert. Die Verweilzeit betrug 23 h. Im Verlauf dieser Temperung wurde gegebenenfalls auch ein Großteil der extrahierbaren Restmonomere vom Wasserdampf extrahiert.

### Zusammensetzung:

a₁) 32,2 mol-% bzw. 37,5 Gew.-%
a₂) 17,8 mol-% bzw. 20,6 Gew.-%
a₃) 48,1 mol-% bzw. 39,1 Gew.-%
a4) 1,9 mol-% bzw. 2,8 Gew.-%

Als relatives Maß für den Kristallinitätsgrad wurde die spezifische Schmelzwärme ΔH_{krist.} mittels Differential Scanning Colorimetric (DSC 990 Firma Du Pont) bei 20°C/min Aufheizrate bestimmt: 54 J/g.

### Komponente A/1V

Ein teilaromatisches Copolyamid gemäß EP-A 519 248
70 Gew.-% Einheiten, die sich von Terephthalsäure und Hexamethylendiamin ableiten,
30 Gew.-% Einheiten, die sich von E-Caprolactam ableiten.

Die VZ betrug: 118 ml/g

### Komponente B

| | | MVI (230°C/2,16 kg) [g/10'] (DIN 53 735) | Schmelzpunkt [°C] (ISO 3146) |
|---|---|---|---|
| B/1 | isotaktisches Polypropylen (Novolen® 1100 der BASF AG) | 2,4 | 165 |
| B/2 | Propylen-Ethylen-Blockcopolymerisat (10 Gew.-% Ethylen) (Novolen® 2500 HX der BASF AG) | 2,7 | 160 |
| B/3 | Propylen-Ethylen-Random-Copolymerisat mit 2,5 Gew.-% Ethylen (Novolen® 3200 HX der BASF AG) | 2,5 | 145 |
| | | MFI(190°C/2,16 kg) [g/10'] | |
| B/4 | HDPE mit einer Dichte δ von 0,945 g/cm³ (Lupolen® 4261 A der BASF AG) | 0,46 (190°C/5 kg) | 131 |
| B/5 | LDPE mit δ = 0,926 g/cm³ (Lupolen® 3020 D der BASF AG) | 0,15 - 0,35 | 114 |

### Komponente C

- C/1:: Ein mit 0,3 Gew.-% Maleinsäureanhydrid gepfropftes Polypropylen (Exxelor® PO 1015 der Firma Exxon)
- C/2:: Copolymer aus LDPE mit 7 Gew.-% Acrylsäure (Lucalen® A 3710 MK der BASF AG) MFI: 10,5 g/10' C 190°/21,6 kg DIN 53 735)
- C/3:: Polyethylen mit 0,1 Gew.-% Maleinsäureanhydrid gepfropft (Admer® L 2100 der Mitsui Petrochemical).

### Komponente D

Ein mit 0,4 Gew.-% Maleinsäureanhydrid gepfropfter EP-Kautschuk (Exxelor® VA 1803 der Firma Exxon)

### Komponente E

Schnittglasfasern mit einem mittleren Durchmesser: 10 µm und aminosilanisierter Oberfläche.

### Herstellung der Formmassen

Die in der Tabelle angegebenen Anteile der jeweiligen Komponenten wurden in einem Zweiwellenextruder der (ZSK 30, (Werner & Pfleiderer) bei einer Temperatur von 325°C in üblicher Weise konfektioniert. Die Polymerschmelze wurde entgast, als Strang extrudiert, durch ein Wasserbad geleitet, granuliert und getrocknet. Das Granulat wurde anschließend bei 325°C zu Normprüfkörpern auf einer Spritzgußmaschine verarbeitet.

Die multiaxiale Zähigkeit W₅₀ (Durchstoßbarkeit) wurde gemäß DIN 53 443 und der E-Modul gemäß DIN 53 457 bestimmt.

Die Zusammensetzungen der Formmassen und die Ergebnisse der Messungen sind der Tabelle zu entnehmen.

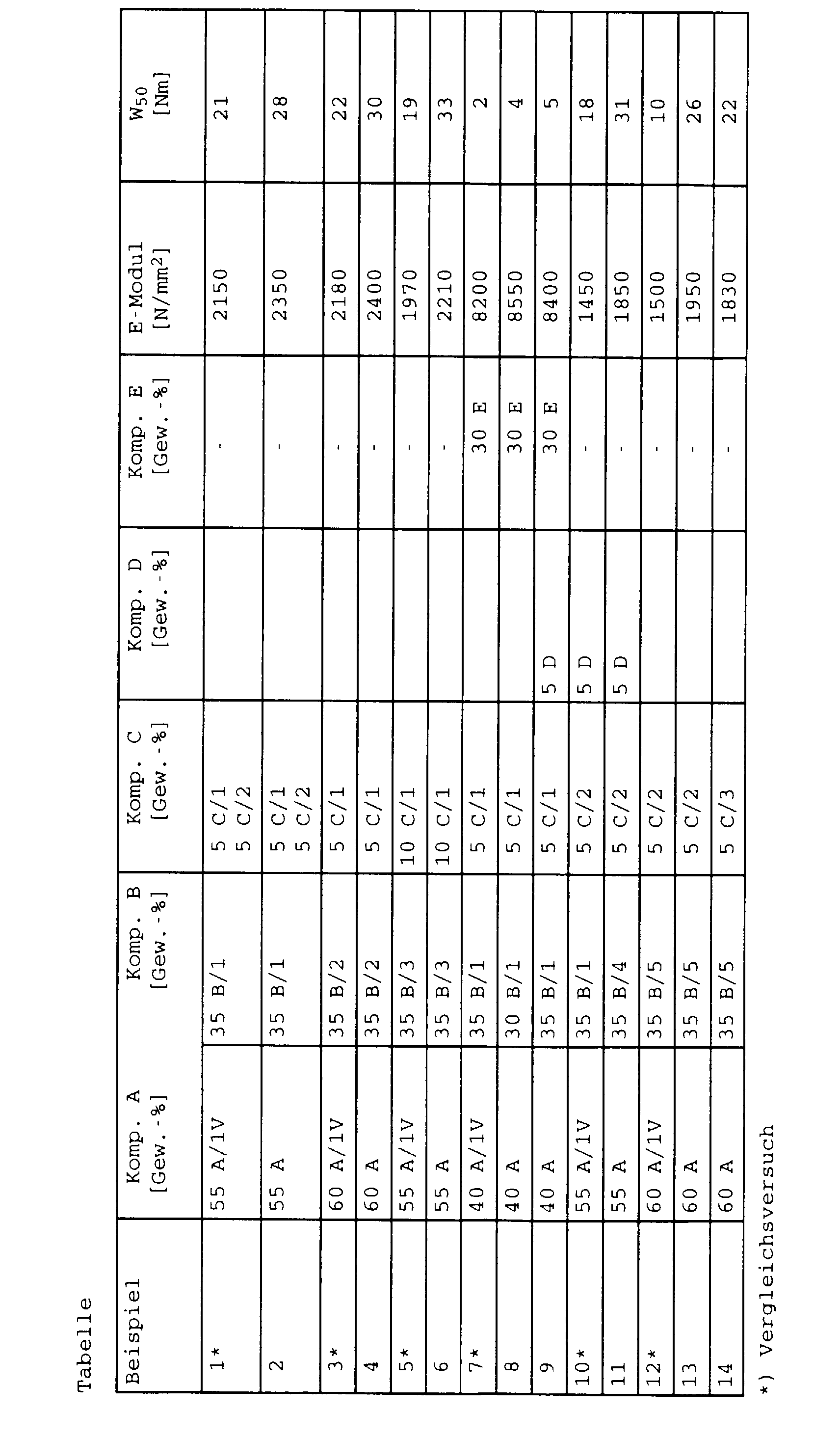

## Patentansprüche

1. Thermoplastische Formmassen, enthaltend
A) 4 bis 95 Gew.-% eines teilkristallinen, teilaromatischen Copolyamids aufgebaut aus
a₁) 30 bis 44 mol-% Einheiten, welche sich von Terephthalsäure ableiten
a₂) 6 bis 20 mol-% Einheiten, welche sich von Isophthalsäure ableiten
a₃) 43 bis 49,5 mol-% Einheiten, welche sich von Hexamethylendiamin ableiten
a₄) 0,5 bis 7 mol-% Einheiten, welche sich von aliphatischen cyclischen Diaminen mit 6 bis 30 C-Atomen ableiten
wobei die Molprozente der Komponenten a₁) bis a₄) zusammen 100 % ergeben und
B) 4 bis 95 Gew.-% eines Homo- oder copolymerisats aus α-Olefinen und gegebenenfalls nicht konjugierten Dienen oder deren Mischungen
C) 1 bis 20 Gew.-% eines Haftvermittlers auf Basis eines Polymerisats aufgebaut aus einem oder mehreren α-Olefinen und 0,1 bis 20 Gew.-%, bezogen auf 100 Gew.-% der Komponente C) funktionellen Monomeren
D) 0 bis 20 Gew.-% eines kautschukelastischen Polymerisates, welches mindestens eine Elastomerphase mit einer Erweichungstemperatur unter -25°C aufweist und nicht der für B) und C) angegebenen Definition entspricht
E) 0 bis 50 Gew.-% eines faser- oder teilchenförmigen Füllstoffes
F) 0 bis 30 Gew.-% üblicher Zusatzstoffe und Verarbeitungshilfsmittel,
wobei die Gewichtsprozente der Komponenten A bis F zusammen 100 % ergeben.

2. Thermoplastische Formmassen nach Anspruch 1, in denen das Copolyamid A) aufgebaut ist aus
a₁) 32 bis 40 mol-%
a₂) 10 bis 18 mol-%
a₃) 46 bis 48,5 mol-%
a₄) 1,5 bis 4 mol-%

3. Thermoplastische Formmassen nach einem der Ansprüche 1 oder 2, in denen das Copolyamid A) bis zu 4 Gew.-%, bezogen auf 100 Gew.-% A), Einheiten weiterer polyamidbildender Monomeren a₅) enthält.

4. Thermoplastische Formmassen nach den Ansprüchen 1 bis 3, in denen das aliphatische cyclische Diamin a₄)
Bis(4-aminocyclohexyl)methan oder
Bis(4-amino-3-methylcyclohexyl)methan
oder deren Mischungen ist.

5. Thermoplastische Formmassen nach den Ansprüchen 1 bis 4, in denen das Copolyamid A einen Triamingehalt von weniger als 0,5 Gew.-% aufweist.

6. Thermoplastische Formmassen nach den Ansprüchen 1 bis 5, in denen das Copolyamid A) einen Kristallinitätsgrad größer 30 % aufweist.

7. Thermoplastische Formmassen nach den Ansprüchen 1 bis 6, in denen die Komponente B) aus Polypropylen- oder Polyethylen oder einem Ethylen-Propylencopolymer oder deren Mischungen aufgebaut ist.

8. Verwendung der thermoplastischen Formmassen gemäß den Ansprüchen 1 bis 7 zur Herstellung von Fasern, Folien und Formkörpern.

9. Formkörper, erhältlich aus den thermoplastischen Formmassen gemäß den Ansprüchen 1 bis 7.

## Claims

1. A thermoplastic molding material containing
A) from 4 to 95 % by weight of of a semicrystalline, partly aromatic copolyamide composed of
a₁) from 30 to 44 mol% of units which are derived from terephthalic acid,
a₂) from 6 to 20 mol% of units which are derived from isophthalic acid,
a₃) from 43 to 49.5 mol% of units which are derived from hexamethylenediamine and
a₄) from 0.5 to 7 mol% of units which are derived from aliphatic cyclic diamines of 6 to 30 carbon atoms,
the molar percentages of components a₁) to a4) together giving 100 %, and
B) from 4 to 95 % by weight of a homo- or copolymer consisting of α-olefins and, if appropriate, non-conjugated dienes or a mixture thereof,
C) from 1 to 20 % by weight of a compatibilizer based on a polymer composed of one or more α-olefins and 0.1 to 20% by weight, based on 100% by weight of component C), of functional monomers,
D) from 0 to 20 % by weight of an elastomeric polymer comprising at least one elastomer phase having a softening temperature of below -25°C and not corresponding to the definition stated for B) and C),
E) from 0 to 50 % by weight of a fibrous or particulate filler and
F) from 0 to 30 % by weight of conventional additives and processing assistants,
the percentages by weight of components A to F together giving 100 %.

2. A thermoplastic molding material as claimed in claim 1, wherein the copolyamide A) is composed of
from 32 to 40 mol% of a₁),
from 10 to 18 mol% of a₂),
from 46 to 48.5 mol% of a₃) and
from 1.5 to 4 mol% of a₄).

3. A thermoplastic molding material as claimed in claim 1 or 2, wherein the copolyamide A) contains up to 4 % by weight, based on 100 % by weight of A), of units of further polyamide-forming monomers a₅).

4. A thermoplastic molding material as claimed in any of claims 1 to 3, wherein the aliphatic cyclic diamine a₄) is
bis(4-aminocyclohexyl)methane or
bis(4-amino-3-methylcyclohexyl)methane
or a mixture thereof.

5. A thermoplastic molding material as claimed in any of claims 1 to 4, wherein the copolyamide A has a triamine content of less than 0.5 % by weight.

6. A thermoplastic molding material as claimed in any of claims 1 to 5, wherein the copolyamide A) has a crystallinity greater than 30 %.

7. A thermoplastic molding material as claimed in any of claims 1 to 6, wherein the component B) is polypropylene or polyethylene or an ethylene/propylene copolymer or a mixture thereof.

8. Use of a thermoplastic molding material as claimed in any of claims 1 to 7 for the production of fibers, films and moldings.

9. A molding obtainable from a thermoplastic molding material as claimed in any of claims 1 to 7.

## Revendications

1. Masses de moulage thermoplastiques, comportant
A) 4 à 95% en poids d'un copolyamide partiellement cristallin, partiellement aromatique, constitué de
a₁) 30 à 44 moles % d'unités qui dérivent d'acide téréphtalique,
a₂) 6 à 20 moles % d'unités qui dérivent d'acide isophtalique,
a₃) 43 à 49,5 moles % d'unités qui dérivent d'hexaméthylènediamine,
a₄) 0,5 à 7 moles % d'unités qui dérivent de diamines cycliques aliphatiques comportant 6 à 30 atomes de C,
les pour-cent molaires des composants a₁) à a₄) formant ensemble 100%, et
B) 4 à 95% en poids d'un homopolymère ou copolymère d'α-oléfines et éventuellement de diènes non conjugués, ou de leurs mélanges,
C) 1 à 20% en poids d'un agent adhérisant à base d'un polymère constitué d'une ou de plusieurs α-oléfines et de 0,1 à 20% en poids, par rapport à 100% en poids du composé C), de monomères fonctionnels,
D) 0 à 20% en poids d'un polymère à élasticité de caoutchouc, qui présente au moins une phase élastomère ayant une température de ramollissement inférieure à -25°C et qui ne correspond pas à la définition donnée pour B) et C),
E) 0 à 50% en poids d'une matière de remplissage fibreuse ou particulaire,
F) 0 à 30% en poids d'additifs et d'adjuvants de traitement courants,
les pour-cent en poids des composants A à F formant conjointement 100%.

2. Masses de moulage thermoplastiques suivant la revendication 1, dans lesquelles le copolyamide A) est constitué de
a₁) 32 à 40 moles %,
a₂) 10 à 18 moles %,
a₃) 46 à 48,5 moles %
a₄) 1,5 à 4 moles %.

3. Masses de moulage thermoplastiques suivant l'une des revendications 1 et 2, dans lesquelles le copolyamide A) contient jusqu'à 4% en poids, par rapport à 100% en poids de A), d'unités d'autres monomères générateurs de polyamide a₅).

4. Masses de moulage thermoplastiques suivant l'une des revendications 1 à 3, dans lesquelles la diamine cyclique aliphatique a₄) est du bis-(4-aminocyclohexyl)-méthane ou du bis-(4-amino-3-méthylcyclohexyl)-méthane, ou des mélanges de ceux-ci.

5. Masses de moulage thermoplastiques suivant l'une des revendications 1 à 4, dans lesquelles le copolyamide A) présente une teneur en triamine inférieure à 0,5% en poids.

6. Masses de moulage thermoplastiques suivant l'une des revendications 1 à 5, dans lesquelles le copolyamide A) présente un degré de cristallinité supérieur à 30%.

7. Masses de moulage thermoplastiques suivant l'une des revendications 1 à 6, dans lesquelles le composant B) est constitué de polypropylène ou de polyéthylène ou d'un copolymère d'éthylène-propylène ou de mélanges de ceux-ci.

8. Utilisation des masses de moulage thermoplastiques suivant l'une des revendications 1 à 7, pour la fabrication de fibres, de feuilles et de corps façonnés.

9. Corps façonnés, que l'on peut obtenir à partir des masses de moulage thermoplastiques suivant l'une des revendications 1 à 7.
